# EUROPÄISCHE PATENTSCHRIFT

(11) **EP 0 791 489 B1**
(45) Veröffentlichungstag und Bekanntmachung des Hinweises auf die Patenterteilung: **15.03.2000**
(21) Anmeldenummer: 96119502.1
(22) Anmeldetag: 05.12.1996
(51) Int. Cl.: B60C 27/02

(54) **Gleitschutzkette**
Anti-slip chain
Chaine anti-dérapante

(30) Priorität: 20.02.1996 DE 29602956 U
(43) Veröffentlichungstag der Anmeldung: 27.08.1997
(73) Patentinhaber: Burgemeister, Winfried, 71522 Backnang (DE)
(72) Erfinder: Burgemeister, Winfried, 71522 Backnang (DE)
(74) Vertreter: Kastner, Hermann, Dipl.-Ing. Patentanwalt

(56) Entgegenhaltungen:
- DE-A- 4 121 737
- FR-A- 465 485
- FR-A- 2 292 600
- FR-A- 2 471 296
- US-A- 2 585 795

## Beschreibung

Kraftfahrzeuge benötigen auf schnee- und eisbedeckten Straßen häufig eine Anfahrhilfe und meist auch eine Fortbewegungshilfe in Form von Schneeketten. Diese können auch bei anderen ungünstigen Straßenverhältnissen, etwa bei schlammigen oder verschlammten Straßen, eingesetzt werden, weshalb sie besser als Gleitschutzketten bezeichnet werden.

Gleitschutzketten herkömmlicher Ausführungsart für größere Fahrzeugräder, wie sie bei Lastkraftwagen üblich sind, haben ein verhältnismäßig großes Eigengewicht. Das erschwert ihre Handhabung sehr, weshalb sie oft nicht oder zu spät angelegt werden. Daher ist vorgeschlagen worden (DE-90 12 004.3 U), für Kraftfahrzeugräder mit Lochfelgen anstelle der Schnee- oder Gleitschutzketten aus untereinander zusammenhängenden Kettenstrangabschnitten eine Anzahl selbständiger und voneinander unabhängiger Kettenstränge zu verwenden, die durch je eines der Löcher der Lochfelge hindurchgezogen werden und mittels eines an seinem einen Ende vorhandenen Karabinerhakens an dem anderen Endabschnitt des Kettenstranges eingehängt werden.

Diese Kettenstränge lassen sich an den Fahrzeugrädern verhältnismäßig leicht und einfach anlegen, und zwar selbst dann, wenn sich das Fahrzeug bereits festgefahren hat, weil der oberhalb des Untergrundes befindliche Teil der Fahrzeugräder immer noch zugänglich ist. Daran kann zumindest ein größerer Teil der Kettenstränge angelegt werden, um das Fahrzeug so weit bewegen zu können, daß auch die restlichen Kettenstränge angelegt werden können und dann das Fahrzeug seine Fahrt wieder aufnehmen kann.

Bei dieser Art Schnee- oder Gleitschutzkette hat sich als nachteilig erwiesen, daß der auf der Lauffläche des Fahrzeugrades gelegene Längenabschnitt der Kettenstränge infolge der Antriebskräfte in Umfangsrichtung des Fahrzeugrades wandert und daß dadurch wiederum die einzelnen Kettenstränge sich am Fahrzeugrad sich festspannen. Dadurch wird es sehr erschwert, wenn nicht gar unmöglich gemacht, nachher die Karabinerhaken der Kettenstränge wieder zu lösen.

Der Erfindung liegt die Aufgabe zugrunde, eine Gleitschutzkette aus einer Anzahl selbständiger und voneinander unabhängiger Kettenstränge so zu gestalten, daß diese nach Gebrauch verhältnismäßig einfach und leicht wieder von dem Fahrzeugrad abgenommen werden können. Diese Aufgabe wird durch eine Gleitschutzkette mit den im Anspruch 1 angegebenen Merkmalen gelöst.

Dadurch, daß die beiden Endabschnitte der Kettenstränge nicht untereinander verhakt werden sondern an einem mit dem Fahrzeugrad verbundenen Haltezapfen eingehängt werden, der eine Ausrichtung hat, die es ermöglicht, das daran eingehängte Kettenglied des außen gelegenen Endabschnittes des Kettenstranges zumindest entlang seiner durch die Querschnittslinie des Fahrzeugrades vorgegebenen Evolvente, wenn nicht gar auf einer noch günstigeren Bewegungsbahn, zu bewegen, kann bei jedem Kettenstrang zumindest der eine Endabschnitt ohne Erhöhung seiner Spannkraft oder gar bei einer Verminderung seiner Spannkraft, von dem Haltezapfen gelöst werden und anschließend der Kettenstrang vom Fahrzeugrad vollständig entspannt abgenommen werden. Die Arretiervorrichtung sorgt dafür, daß während des Einsatzes der Gleitschutzkette ihre Kettenstränge am Fahrzeugrad festgehalten und gesichert werden.

Durch eine Ausgestaltung nach Anspruch 2 wird eine verhältnismäßig einfach zu handhabende und betriebssichere Arretiervorrichtung geschaffen. Durch eine Weiterbildung nach Anspruch 3 wird die Handhabung der Arretiervorrichtung noch weiter vereinfacht und die Betriebssicherheit weiter erhöht. Durch die Weiterbildung nach Anspruch 4 wird die Handhabung der Arretiervorrichtung ebenfalls erleichtert. Durch eine Ausgestaltung nach Anspruch 5 wird erreicht, daß der Sicherungsstift ohne Schwierigkeiten in das zugehörige Durchgangsloch am Haltezapfen eingesteckt und daraus herausgezogen werden kann.

Durch eine Ausgestaltung nach Anspruch 6 wird dafür gesorgt, daß die Haltezapfen gewissermaßen verdeckt angeordnet sind und sie deshalb sowohl im benutzten wie auch im unbenutztem Zustand an der Felge verbleiben können, ohne deren sonstige Funktion zu beeinträchtigen.

Bei einer Ausgestaltung nach Anspruch 7 sind die Haltezapfen stets am Fahrzeugrad vorhanden. Bei einer Ausgestaltung nach Anspruch 8 können die Haltezapfen leicht vom Fahrzeugrad abgenommen werden, wenn sie während längerer Zeitspanne, z.B. in der warmen Jahreszeit, nicht benötigt werden. Die Ausgestaltung nach Anspruch 8 kommt vor allem bei solchen Fahrzeugrädern in Betracht, bei denen die Querschnittsform der Felge eine Art Hinterschnitt aufweist, hinter dem der Tragring für die Haltezapfen festgeklemmt werden kann, so daß gleichzeitig ein Formschluß für den Tragring gegeben ist, wohingegen die Ausgestaltung nach Anspruch 7 dann in Betracht kommt, wenn die Felge einen Hinterschnitt nicht aufweist und deshalb ein Tragring zumindest nicht durch Formschluß verankert werden kann.

Eine Weiterbildung nach Anspruch 9 erleichtert die Handhabung und das Anlegen des Tragringes an dem Fahrzeugrad an einer Stelle, die von der Vorderseite aus betrachtet einen Hinterschnitt hat, so daß der Tragring besonders sicher angeordnet werden kann. Eine Weiterbildung nach Anspruch 10 liefert dafür eine sehr einfach ausgebildete und zu handhabende Spreizvorrichtung.

Durch eine Ausgestaltung nach Anspruch 11 wird sichergestellt, daß der auf der Rückseite des Fahrzeugrades verlaufende Endabschnitt des Kettenstranges zuerst an dem Haltezapfen eingehängt wird und der auf der Vorderseite des Fahrzeugrades verlaufende Endabschnitt zuletzt am Haltezapfen eingehängt wird, da dieser zum Lösen des Kettenstranges zuerst abgenommen werden muß, weil die Ausrichtung des Haltezapfens darauf abgestimmt ist. Durch eine Weiterbildung nach Anspruch 12 wird die richtige Handhabung der Kettenstränge ebenfalls begünstigt.

Im folgenden wird die Erfindung anhand von in der Zeichnung dargestellten Ausführungsbeispielen näher erläutert. Es zeigen:
- Fig. 1: einen Aufriß eines Kraftfahrzeugrades mit aufgezogener Gleitschutzkette;
- Fig. 2: einen ausschnittweise dargestellten diametral zur Radachse verlaufenden Querschnitt des Fahrzeugrades mit einem angelegten Kettenstrang mit Haltevorrichtung;
- Fig. 3: einen ausschnittweise dargestellten Querschnitt der Felge entsprechend Fig. 2, mit Angaben zur Ausrichtung der Teile;
- Fig. 4: einen ausschnittweise dargestellten Querschnitt der Felge mit einer anderen Ausführungsform der Haltevorrichtung der Gleitschutzkette;
- Fig. 5: einen ausschnittweise dargestellten Aufriß eines Tragringes der Ausführungsform nach Fig. 4;
- Fig. 6: eine teilweise geschnitten dargestellte Ansicht einer Arretiervorrichtung für die Gleitschutzkette;
- Fig.7: eine ausschnittweise und teilweise geschnitten dargestellte Ansicht der Gleitschutzkette mit einem abgewandelten Haltezapfen.

Die Gleitschutzkette 10 wird durch eine Anzahl selbständiger und voneinander unabhängiger Kettenstränge 11 gebildet. Die Kettenstränge 11 sind Abschnitte von Rundgliederketten. Die Länge der Kettenstränge 11 richtet sich nach den Abmessungen des Fahrzeugrades 12, das mit einer Lochfelge ausgerüstet ist, und zwar nach der Form und den Abmessungen der Lochfelge 13 und des darauf aufgezogenen Reifens 14.

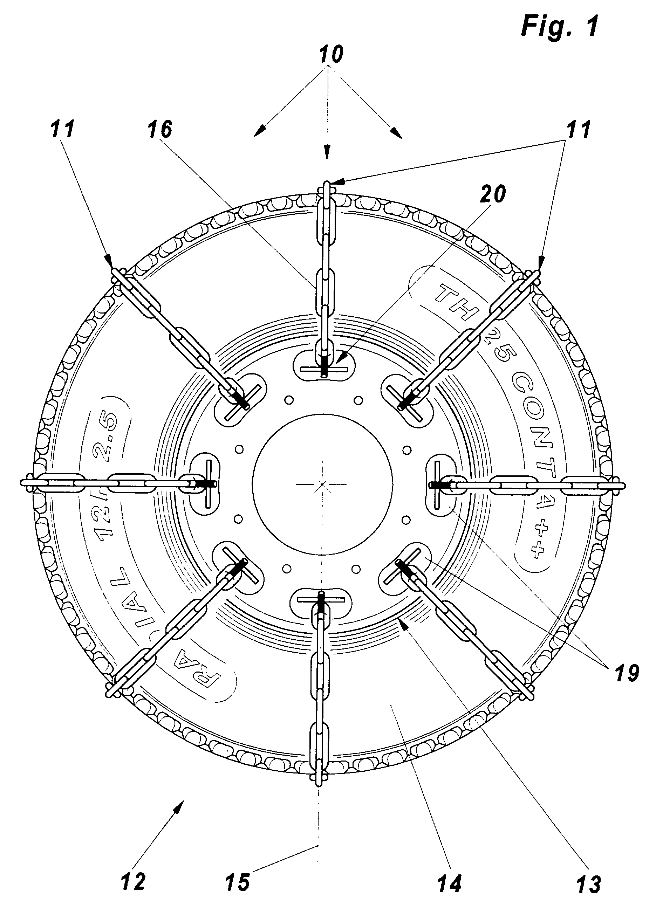

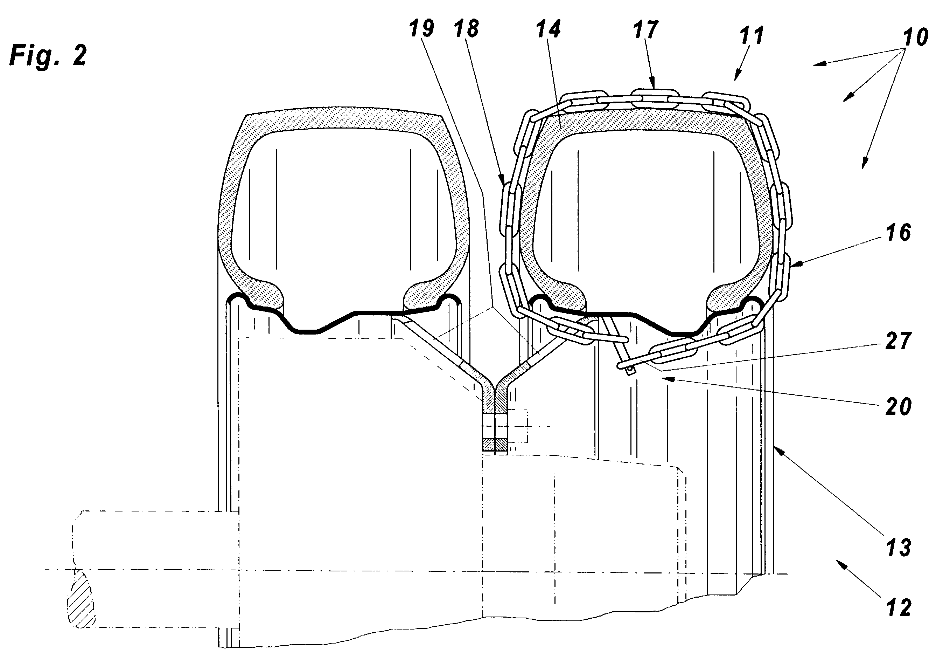

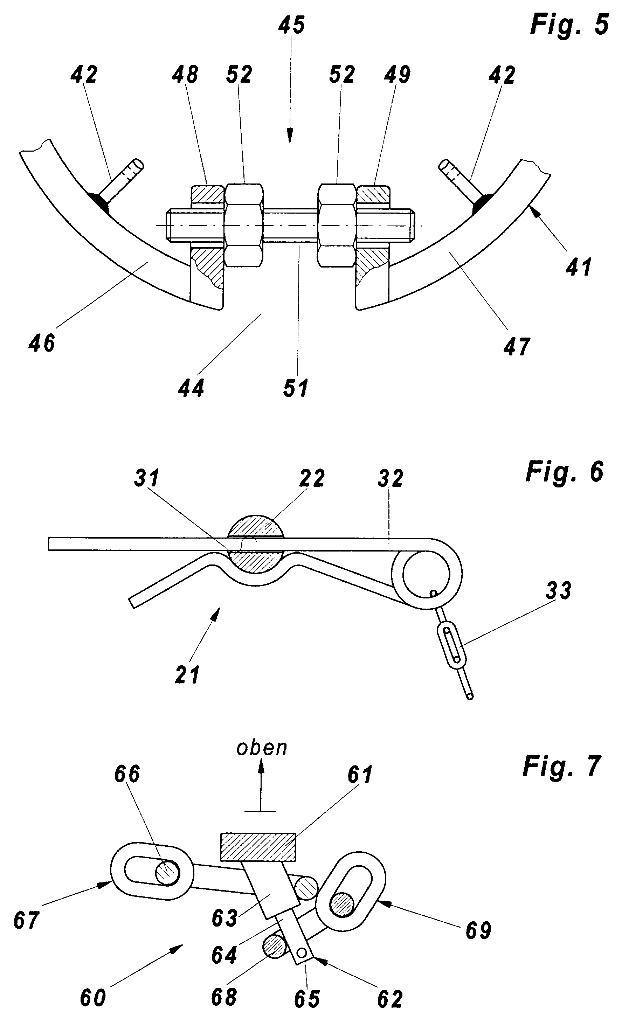

Wie aus Fig. 1 und Fig. 2 ersichtlich ist, werden die einzelnen Kettenstränge 11 in einer diametral zur Radachse ausgerichteten Ebene 15, die in Fig. 1 durch eine Strichpunktlinie angedeutet ist und in Fig. 2 praktisch durch die Zeichenebene verkörpert wird, um den Reifen 14 des Fahrzeugrades 12 so herumgelegt, daß von ihren drei Abschnitten 16, 17 und 18 der mittlere Abschnitt 17 auf der Lauffläche des Reifens 14 aufliegt, daß von den beiden Endabschnitten der vordere Endabschnitt 16 an der von außen zugänglichen Vorderseite des Kraftfahrzeugrades 12 entlang und der hintere Abschnitt 18 an der Hinterseite des Fahrzeugrades 12 entlang und durch eines der Löcher 19 der Lochfelge 13 hindurch zu einer an der Vorderseite der Lochfelge 13 angeordneten Haltevorrichtung 20 verlaufen. Das der Haltevorrichtung 20 nächstgelegene Kettenglied der beiden Endabschnitte 16 und 18 ist mit der Haltevorrichtung 20 lösbar verbunden und daran mittels einer Arretiervorrichtung 21 (Fig. 6) gegen unbeabsichtigtes Lösen gesichert.

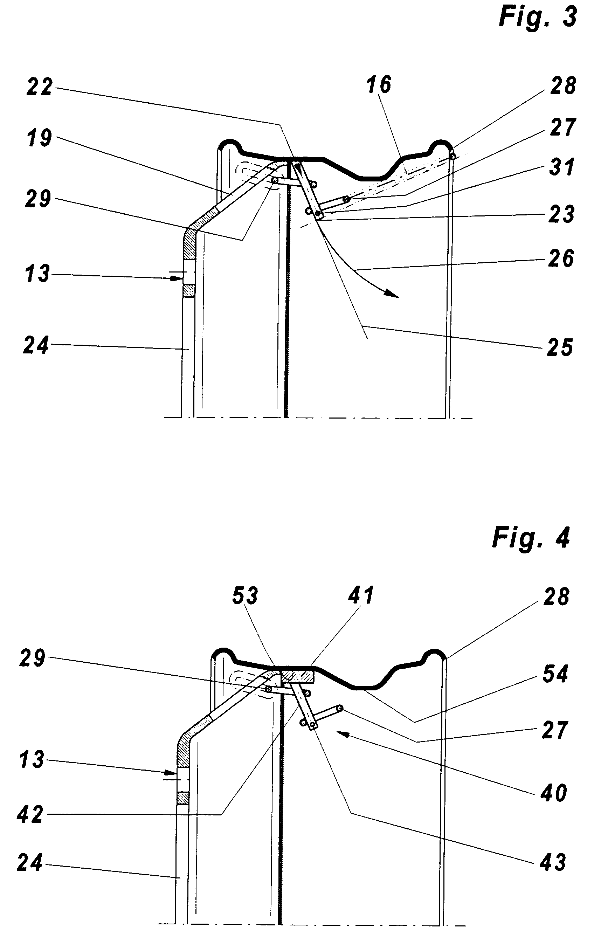

Die Haltevorrichtung 20 weist für jeden Kettenstrang 11 einen Haltezapfen 22 auf, der in der Umfangsrichtung der Lochfelge 13 zumindst annähernd in der Querschnittsebene eines ihrer Löcher 19 angeordnet ist. Jeder Haltezapfen 22 ist in dieser Querschnittsebene 15 so ausgerichtet (Fig. 3), daß an seinem von der Lochfelge 13 abgekehrten freien Ende 23 die Mantellinien des der Felgenschüssel 24 der Lochfelge 13 zugekehrten Umfangsbereiches zumindest annähernd mit der Tangente 25 der Evolvente 26 fluchten, die von dem am Haltezapfen 22 eingehängten Kettenglied 27 des vorderen Endabschnittes 16 beschrieben wird, wenn dieses Kettenglied 27 vom Haltezapfen 22 abgezogen wird und dabei der Endabschnitt 16 von den in der Querschnittsebene 15 vorstehenden Querschnittsbereichen der Lochfelge 13 abgewickelt wird. In Fig. 3 ist angenommen, daß der Endabschnitt 16 vom Haltezapfen 22 aus als nächstgelegener Stelle an dem äußeren Felgenhorn 28 der Lochfelge 13 anliegt und um dieses herum abgewickelt wird. Dabei ist außerdem vorausgesetzt, daß das am Haltzapfen 22 eingehängte Kettenglied 29 des hinteren Endabschnittes 18 vom freien Ende 23 des Haltezapfens 22 aus gesehen unterhalb des Kettengliedes 27 gelegen ist, d. h., daß das Kettenglied 29 des hinteren Endabschnittes 18 zuerst am Haltezapfen 22 eingehängt worden ist und danach erst das Kettenglied 27 des vorderen Endabschnittes 16. Die Arretiervorrichtung 21 wird durch ein Durchgangsloch 31 am Haltezapfen 22 und durch einen in dieses Durchgangsloch 31 einsteckbaren Arretierstift 32 gebildet (Fig. 6). Das Durchgangsloch 31 ist zumindest annähernd quer zur Längsachse des Haltezapfens 22 ausgerichtet. Es ist außerdem so ausgerichtet, daß seine Axialprojektion weder außenliegende Felgenteile oder Reifenteile noch benachbarte Haltezapfen 22 und die daran eingehängten Kettenstränge 11 durchdringt oder berührt. Zweckmäßigerweise ist der Arretierstift 32 als selbstsichernder Stift, als sogenannter Federstecker, ausgebildet.

Es ist weiterhin zweckmäßig, daß der Arretierstift 32 mittels einer Sicherungskette 33 mit Kettengliedern kleinerer Außenabmessungen mit dem vorderen Endabschnitt 16 der Kettenstränge 11 verbunden ist.

In Fig. 2 und Fig. 3 ist der Haltezapfen 22 als zylindrischer Stift dargestellt. Er kann in seinem vom freien Ende 23 ausgehenden und bis hinter das Durchgangsloch 31 reichenden Längenabschnitt aber auch schwach kegelig ausgebildet sein, sich also zum freien Ende 23 hin verjüngen.

In der in Fig. 1 bis Fig. 3 dargestellten Ausführungsform der Gleitschutzkette 10 sind die Haltezapfen 22 in einem von der Außenseite der Lochfelge 13, d.h. von ihrem äußeren Felgenhorn 28, entfernt gelegenen Bereich an der Lochfelge 13 einzeln angeschweißt. Dadurch stören sie weder bei eingehängten Kettensträngen noch bei abgenommenen Kettensträngen.

Aus Fig. 4 ist eine abgewandelte Haltevorrichtung 40 ersichtlich. Sie weist einen Tragring 41 auf, an dem sämtliche Haltezapfen 42 angeordnet sind, und zwar zweckmäßigerweise daran angeschweißt sind. Im übrigen sind die Halte zapfen 42 weitestgehend gleich wie die Haltezapfen 22 ausgebildet. Sie sind vor allem in der gleichen Weise ausgerichtet, wie es bei den Haltezapfen 22 erläutert wurde. Daran sind das Kettenglied 27 des vorderen Endabschnittes 16 und das Kettenglied 29 des hinteren Endabchnittes 18 in der gleichen Reihenfolge eingehängt. Sie werden an den Haltezapfen 42 durch eine Arretiervorrichtung gesichert, die gleich der Arretiervorrichtung 21 (Fig. 6) ausgebildet ist und von der in Fig. 3 lediglich das Durchgangsloch 43 am Haltezapfen 42 dargestellt ist.

Wie aus Fig. 5 ersichtlich ist, ist der Tragring 41 an einer Umfangsstelle 44 aufgetrennt. An dieser Trennstelle ist eine Spreizvorrichtung 45 angeordnet.

Die aus Fig. 5 ersichtliche Ausführungsform der Spreizvorrichtung 45 weist an den beiden der Trennstelle 44 benachbarten Endabschnitten 46 und 47 je einen Lappen 48 bzw. 49 auf, der mit dem betreffenden Endabschnitt verschweißt ist. Die Lappen 48 und 49 sind zumindest annähernd parallel zueinander ausgerichtet. Sie weisen je ein Durchgangsloch auf, die beide miteinander fluchten. Durch diese Durchgangslöcher ist ein Gewindestift 51 hindurchgesteckt, auf den auf der Innenseite der beiden Lappen 48 und 49 zwei Muttern 52 aufgeschraubt sind. Wenn die Muttern 52 so gedreht werden, daß sie sich auf dem Gewindestift 51 nach außen bewegen, legen sie sich an dem jeweils benachbarten Lappen 48 bzw. 49 an und drücken dann die Endabschnitte 46 und 47 des Tragringes 41 auseinander, bis der Tragring 41 an der Anlagefläche der Lochfelge 13 fest anliegt.

Wie aus Fig. 4 ersichtlich ist, kommt die Haltevorrichtung 40 mit einem Tragring 41 dann in Betracht, wenn die Lochfelge 13 einen Umfangsflächenabschnitt 53 aufweist, zwischen dem und der durch das äußere Felgenhorn 28 verkörperten äußeren Ebene ein Umfangsflächenabschnitt 54 vorhanden ist, dessen lichte Weite kleiner als diejenige des Umfangsflächenabschnittes 53 ist, der als Anlagefläche für den Tragring 41 dient. Dieser Umfangsflächenabschnitt 53 muß nicht unbedingt eine Zylindermantelfläche sein, wenngleich das den Vorteil hat, daß der Tragring 41 als Abschnitt einer Kreiszylindermantelfläche ausgebildet sein kann und daher sehr einfach aus einem Stabstahlabschnitt mit rechteckigem Querschnitt hergestellt werden kann.

Aus Fig. 7 ist eine Haltevorrichtung 60 ersichtlich, die in ihrem grundsätzlichen Aufbau ähnlich der Haltevorrichtung 40 ausgebildet ist. Sie weist einen Tragring 61 auf, an dem die Haltezapfen 62 angeordnet sind. Sie sind in der gleichen Weise ausgerichtet, wie die Haltezapfen 22 der Haltevorrichtung 20 (Fig. 3) und auch wie die Haltezapfen 42 der Haltevorrichtung 40 (Fig. 4).

Die Haltezapfen 62 weisen zwei Längenabschnitte 63 und 64 mit unterschiedlichem Außendurchmesser auf. Der Längenabschnitt 64 mit dem kleineren Durchmesser ist dem freien Ende 65 des Haltezapfens 62 benachbart. Der Längenabschnitt 63 mit dem größeren Durchmesser ist dem Tragring 61 benachbart und an seiner Stirnfläche mit diesem verschweißt.

Die Kettenstränge sind auf die Haltevorrichtung 60 in der Weise abgestimmt, daß das Endglied 66 des hinteren Endabschnittes 67 eine solche lichte Weite hat, daß es am Haltezapfen 62 auf den Längenabschnitt 63 mit dem größeren Außendurchmesser aufgesteckt werden kann und daß das Endglied 68, zweckmäßigerweise auch einige daran anschließende weitere Kettenglieder, des vorderen Endabschnittes 69 eine solche lichte Weite haben, daß sie am Haltezapfen 62 nur auf den Längenabschnitt 64 mit dem kleineren Durchmesser aufgesteckt werden können, nicht aber auf den Längenabschnitt 63 mit dem größeren Durchmesser. In Fig. 7 ist das dadurch versinnbildlicht, daß die Kettenglieder des vorderen Endabschnittes 69 mit entsprechenden kleineren Abmessungen und das Endglied des hinteren Endabschnittes 67 mit entsprechend größeren Abmessungen dargestellt sind. Zur Vereinfachung der Herstellung der Kettenstränge ist es zweckmäßig, mit Ausnahme des Endgleides 66 des hinteren Endabschnittes 67 alle übrigen Kettenglieder der Kettenstränge untereinander gleich, und zwar gleich dem Kettenglied 68 des vorderen Endabschnittes 69 in Fig. 7, auszuführen und an einem Ende dieser Kettenstränge das Endglied 66 mit der größeren lichten Weite anzufügen, das dann den hinteren Endabschnitt 67 kennzeichnet.

### Bezugszeichenliste B 20. 12. EU 3

- 10: Gleitschutzkette
- 11: Kettenstränge
- 12: Fahrzeugrad
- 13: Lochfelge
- 14: Reifen
- 15: Ebene
- 16: vorderer Ebdabschnitt
- 17: mittlerer Endabschnitt
- 18: hinterer Endabschnitt
- 19: Loch
- 20: Haltevorrichtung
- 21: Arretiervorrichtung
- 22: Haltezapfen
- 23: freies Ende
- 24: Felgenschlüssel
- 25: Tangente
- 26: Evolvente
- 27: Kettenglied
- 28: Felgenhorn
- 29: Kettenglied
- 31: Durchgangsloch
- 32: Arretierstift
- 33: Sicherungskette

- 40: Haltevorrichtung
- 41: Tragring
- 42: Haltezapfen
- 43: Durchgangsstelle
- 44: Umfangsstelle
- 45: Spreizvorrichtung
- 46: Endabschnitt
- 47: Endabschnitt
- 48: Lappen
- 49: Lappen

- 50: Gleitschutzkette
- 51: Gewindestift
- 52: Muttern
- 53: Umfangsflächenabschnitt
- 54: Umfangsflächenabschnitt

- 60: Haltevorrichtung
- 61: Tragring
- 62: Haltezapfen
- 63: Längenabschnitt
- 64: Längenabschnitt
- 65: freies Ende
- 66: Endglied
- 67: Endabschnitt
- 68: Endglied
- 69: Endabschnitt

## Patentansprüche

1. Gleitschutzkette für Kraftfahrzeuge mit Lochfelgen, mit den Merkmalen:
- sie wird durch eine Anzahl selbständiger und von einander unabhängiger Kettenstränge (11) gebildet,
- die Kettenstränge (11) sind hinsichtlich ihrer Formgebung und Abmessungen auf die Löcher (19) der Lochfelge (13) so abgestimmt, daß von jedem Kettenstrang (11) zumindest ein Endabschnitt (18) durch eines der Löcher (19) einfädelbar ist,
- an der von außen zugänglichen Vorderseite der Lochfelge (13) ist eine Haltevorrichtung (20) für jeden Kettenstrang (11) vorhanden, die mit der Lochfelge (13) lösbar oder zumindest zum Teil unlösbar verbunden ist,
- die Haltevorrichtung (20) weist für jeden Kettenstrang (11) einen Haltestift (32) auf,
- jeder Haltezapfen (22) ist zumindest annähernd in der Querschnittsebene (13) eines der Löcher (19) der Lochfelge (13) angeordnet,
- jeder Haltezapfen (22) ist in dieser Querschnittsebene (15) so ausgerichtet, daß an seinem von der Lochfelge (13) abgekehrten freien Ende (23) die Mantellinien des der Felgenschlüssel (24) der Lochfelge (13) zugekehrten Umfangsbereiches zumindest annähernd mit der Tangente (25) der Evolvente (26) fluchten, die von demjenigen Kettenglied (27) beschrieben wird,
- - das zu dem auf der Vorderseite der Lochfelge (13) verlaufenden Endabschnitt (16) des Kettenstranges (11) gehört und
- - das am Haltezapfen (22) dem freien Ende (23) näher gelegen ist als das Kettenglied (29), das zu dem auf der Rückseite der Felge (13) verlaufenden Endabschnittes (18) gehört,
- der Haltezapfen (22) weist für die an ihn eingehängten Kettenglieder (27; 29) im Bereich seines freien Endes (23) eine lösbare Arretiervorrichtung (21) auf.

2. Gleitschutzkette nach Anspruch 1,
mit den weiteren Merkmalen:
- die Arretiervorrichtung (21) wird gebildet,
-- durch ein zumindest quer zur Längsachse des Haltezapfens (22) ausgerichtetes Durchgangsloch (31) des Haltezapfens (22) und
-- durch einen in dieses Durchgangsloch (31) einsteckbaren Arretierstift (32).

3. Gleitschutzkette nach Anspruch 2,
mit dem weiteren Merkmal:
- der Arretierstift (32) ist als selbstsichernder Stift, insbesondere als Federstecker, ausgebildet.

4. Gleitschutzkette nach Anspruch 2 oder 3,
mit dem weiteren Merkmal:
- das Durchgangsloch (31) am Haltezapfen (22) ist so ausgerichtet, daß seine axiale Projektion weder außenliegende Felgenteile (28) oder Reifenteile noch benachbarte Haltezapfen (22) und die daran eingehängten Kettenstränge (11) durchdringt oder berührt.

5. Gleitschutzkette nach einem der Ansprüche 2 bis 4,
mit dem weiteren Merkmal:
- der Arretierstift (32) ist mittels einer Sicherungskette (33) kleinerer Außenabmessungen mit dem zugehörigen Kettenstrang (11) verbunden.

6. Gleitschutzkette nach einem der Ansprüche 1 bis 5,
mit dem weiteren Merkmal:
- die Haltezapfen (22) sind an einem von dem äußeren Felgenhorn (28) der Lochfelge (13) entfernt gelegenen Flächenbereich angeordnet.

7. Gleitschutzkette nach einem der Ansprüche 1 bis 6,
mit dem weiteren Merkmal:
- die Haltezapfen (22) sind an der Lochfelge (13) angeschweißt.

8. Gleitschutzkette nach einem der Ansprüche 1 bis 6,
mit den weiteren Merkmalen:
- die Haltezapfen (42) sind an einem gemeinsamen Tragring (41) angeordnet, bevorzugt daran angeschweißt,
- bevorzugt ist der Tragring (41) mit der Lochfelge (13) lösbar verbunden.

9. Gleitschutzkette nach Anspruch 8,
mit den weiteren Merkmalen:
- der Tragring (41) ist an einer Umfangsstelle (49) aufgetrennt,
- an der Trennstelle (49) ist eine Spreizvorrichtung (45) angeordnet, mittels der die Enden (46; 47) des Tragringes (41) auseinanderspreizbar sind.

10. Gleitschutzkette nach Anspruch 9,
mit dem weiteren Merkmal:
- die Spreizvorrichtung (45) wird gebildet
- - durch je einen an jedem Ende (46; 47) des Tragringes (41) angeordneten Lappen (48; 49), die beide in der Ebene des Tragringes (41) gelegen und nach dessen Innenseite hin und zueinander zumindest annähernd parallel ausgerichtet sind,
- - durch je ein Durchgangsloch in jedem der beiden Lappen (48; 49), die miteinander fluchten,
- - durch je einen Gewindestift (51), der in die Durchgangslöcher an den Lappen (48; 49) einsteckbar ist und
- - durch zwei Muttern (52), die auf den Gewindestift (51) aufschraubbar sind und die auf der einander zugekehrten Seite der beiden Lappen (48; 49) angeordnet sind.

11. Gleitschutzkette nach einem der Ansprüche 1 bis 10,
mit den weiteren Merkmalen:
- der Haltezapfen (62) weist zwei Längenabschnitte (63; 64) mit unterschiedlichem Außendurchmesser auf,
- der Längenabschnitt (64) mit dem kleineren Durchmesser ist dem freien Ende (65) des Haltezapfens (62) benachbart,
- von den Kettengliedern des auf der Rückseite der Lochfelge (13) verlaufenden Endabschnittes (67) der Kettenstränge hat zumindest das Endglied (66) eine solche Weite, daß es auf den Längenabschnitt (63) des Haltezapfens (62) mit dem größeren Durchmesser aufsteckbar ist,
- die Kettenglieder (68) des auf der Vorderseite der Lochfelge (13) verlaufenden Endabschnittes (69) der Kettenstränge haben eine solche Weite, daß sie nur auf den Längenabschnitt (64) des Haltezapfens (62) mit dem kleineren Durchmesser aufsteckbar sind.

12. Gleitschutzkette nach Anspruch 11,
mit dem weiteren Merkmal:
- die Sicherungskette (33) des Arretierungsstiftes (32) ist mit demjenigen Endabschnitt (69) des Kettenstranges verbunden, dessen Kettenglieder (68) eine geringere Weite haben.

## Claims

1. Anti-skid motor-vehicle tyre chain with hole rims, with the following features:
- it is formed of a number of self-supporting, mutually-independent lengths of chain (11),
- in shape and dimension, the lengths of chain (11) are matched to the holes (19) of the hole rim (13) in such a way that at least one end section (18) of each length of chain (11) can be threaded through one of the holes (19),
- a locking device (20) for each length of chain (11) is present on the externally accessible front face of the hole rim (13), said locking device being connected to the hole rim (13) detachably or at least partially undetachably,
- for each length of chain (11) the locking device (20) has a retaining pin (32),
- each locking stud (22) is designed in this transverse-sectional plane (15) in such a way that, at its free end (23) facing away from the hole rim (13), the surface lines of the circumferential area turned towards the rim key (24) of the hole rim (13) are in at least approximate alignment with the tangent (25) of the involute (26) described by that chain link (27)
- - which belongs to the chain-length (11) end section (16) along on the front face of the hole rim (13) and
- - which on the locking stud is more closely positioned to the free end (23) than is the chain link (29) belonging to the end section (18) along the rear side of the rim (13),
- the locking stud (22) has a detachable arrester (21) in the region of its free end (23) for the chain links (27; 29) hung on to it.

2. Anti-skid tyre chain according to Claim 1,
with the further features:
- The arrester (21) is formed
- - of a through bore (31) aligned at least transversely to the longitudinal axis of the locking stud (22) and
- - of an arresting pin (32) insertable into this through bore (31).

3. Anti-skid tyre chain according to Claim 2,
with the further feature:
- the arresting pin (32) is designed as a self-locking pin, in particular as a sprung insertion element.

4. Anti-skid tyre chain according to Claim 2 or 3,
with the further feature:
- the through bore (31) on the locking stud (22) is designed in such a way that its axial projection neither penetrates nor touches outer parts of the rim (28), parts of the tyre, adjacent locking studs (22) or the lengths of chain (11) hung on them.

5. Anti-skid tyre chain according to one of Claims 2 to 4,
with the further feature:
- the arresting pin (32) is connected with the associated length of chain (11) by a security chain (33) of smaller outer dimensions.

6. Anti-skid tyre chain according to one of Claims 1 to 5,
with the further feature:
- the locking studs (22) are arranged on a surface area at a distance from the outer rim flange (28) of the hole rim (13).

7. Anti-skid tyre chain according to one of Claims 1 to 6,
with the further feature:
- the locking studs (22) are welded on to the hole rim (13).

8. Anti-skid tyre chain according to one of Claims 1 to 6,
with the further features:
- the locking studs (42) are arranged on a common supporting ring (41), preferably welded thereon,
- the supporting ring (41) is preferably detachably connected to the hole rim (13).

9. Anti-skid tyre chain according to Claim 8,
with the further features:
- the supporting ring (41) is open at a point on the circumference (49),
- a parting device (45) is arranged at the point of separation (49), with which parting device the ends (46; 47) of the supporting ring (41) can be spread apart.

10. Anti-skid tyre chain according to Claim 9,
with the further feature:
- the parting device (45) is formed
- - of flaps (48; 49), one arranged at each end (46; 47) of the supporting ring (41), which are both positioned in the plane of the supporting ring (41) and are aligned towards the inner face of the said supporting ring, at least approximately parallel to one another,
- - of a through bore in each of the two flaps (48; 49), which are aligned with one another,
- - of threaded pins (51), one of which is insertable into each through bore on the flaps (48; 49) and
- - of two nuts (52), which can be screwed on to the threaded pin (51) and are arranged on the sides of the two flaps (48; 49) facing one another.

11. Anti-skid tyre chain according to one of Claims 1 to 10,
with the further features:
- the locking stud (62) has two longitudinal sections (63; 64) of differing outer diameter,
- the longitudinal section (64) with the smaller diameter is adjacent to the free end (65) of the locking stud (62),
- of the links of the chain-length end section (67) on the rear side of the hole rim (13), at least the end member (66) is of a width such that it may be positioned on to the longitudinal section (63) of the locking stud (62) with the larger diameter,
- the links (68) of the chain-length end section (69) on the front face of the hole rim (13) are of a width such that they can only be positioned on to the longitudinal section (64) of the locking stud (62) with the smaller diameter.

12. Anti-skid tyre chain according to Claim 11,
with the further feature:
- the safety chain (33) of the arresting pin (32) is connected with that chain-length end section (69) the links (68) of which are of a narrower width.

## Revendications

1. Chaîne antidérapante pour véhicules automobiles équipés de jantes à trous,
caractérisée en ce qu'
- elle est constituée d'un certain nombre de brins de chaîne (11) distincts et indépendants les uns des autres,
- la forme et les dimensions des brins de chaîne (11) sont accordées aux trous (19) de la jante (13), à au moins une partie d'extrémité (18) de chaque brin (11) pouvant être enfilée dans un des trous (19),
- sur le côté avant de la jante (13), accessible de l'extérieur, un dispositif de maintien (20) pour chaque brin est relié à la jante à trous de manière amovible ou au moins partiellement inamovible,
- le dispositif de maintien (20) comporte, pour chaque brin de chaîne (11), une broche de maintien (32),
- chaque broche de maintien (22) est, au moins approximativement, montée dans le plan de section (15) d'un des trous (19) de la jante (13),
- chaque broche de maintien (22) est, dans ce plan de section (15) orientée de manière que sur son extrémité libre (23) éloignée de la jante, les génératrices de sa zone périphérique regardant vers la plage de fixation (24) de la jante (13) sont au moins approximativement alignées avec la tangente (25) de la trajectoire (26) que décrit le maillon de chaîne (27) qui est situé au bout de la partie d'extrémité (16) du brin (11) passant sur la face avant de la jante (13) et qui est monté sur la tige de maintien (22) de l'extrémité libre (23), plus près que le maillon (29) appartenant à la partie d'extrémité (18) passant sur la face arrière de la jante(13),
- la tige de maintien (22) présente, vers son extrémité libre (23) un dispositif amovible d'arrêt (21) des maillons de chaîne (27, 29) accrochés à la tige.

2. Chaîne antidérapante selon la revendication 1,
caractérisée en ce que
le dispositif d'arrêt est constitué par un trou de passage (31) percé dans la tige de maintien (22) au moins transversalement à l'axe de celle-ci et dans lequel peut être emmanchée une broche d'arrêt (32).

3. Chaîne antidérapante selon la revendication 2,
caractérisée en ce que
la broche d'arrêt (32) est une broche autosécurisée, en particulier une goupille élastique.

4. Chaîne antidérapante selon la revendication 2 ou 3,
caractérisée en ce que
le trou de passage (31) dans la tige de maintien (22) est orienté de manière que sa projection axiale ne traverse ou ne touche ni les parties (28) de la jante ou du pneumatique situées vers l'extérieur, ni les brins de chaîne (11) accrochés à la tige.

5. Chaîne antidérapante selon une des revendications 2 à 4,
caractérisée en ce que
la broche d'arrêt (32) est reliée au brin correspondant (11) par une chaîne de sécurité (33) de plus petites dimensions.

6. Chaîne antidérapante selon une des revendications 1 à 5,
caractérisée en ce que
les tiges de maintien (22) sont montées sur une zone de portée éloignée du talon externe (28) de la jante à trous (13).

7. Chaîne antidérapante selon une des revendications 1 à 6,
caractérisée en ce que
les tiges de maintien (22) sont soudées à la jante (13).

8. Chaîne antidérapante selon une des revendications 1 à 6,
caractérisée en ce que
les tiges de maintien (42) sont montées sur une bague porteuse commune (41), de préférence par soudure, cette bague étant de préférence reliée à la jante (13) de manière amovible.

9. Chaîne antidérapante selon la revendication 8,
caractérisée en ce que
la bague porteuse (41) est coupée en un point (49) de sa périphérie, où est monté un dispositif d'écartement (45) qui permet d'écarter les extrémités (46, 47) de la bague porteuse (41).

10. Chaîne antidérapante selon la revendication 9,
caractérisée en ce que
le dispositif d'écartement (45) est constitué :
- par une languette montée sur chacune des extrémités (46, 47) de la bague porteuse (41), ces languettes (48, 49) étant toutes deux, dans le plan de la bague porteuse (41), orientées vers la face interne de celle-ci et au moins à peu près parallèles entre elles,
- par un trou de passage percé dans chaque languette (48, 49) avec alignement de ces trous,
- par une broche filetée (51) qui peut être passée dans les trous des pattes (48, 49),
- par deux écrous (52) montés chacun sur la tige filetée (51), contre la face en regard de la languette voisine (48, 49).

11. Chaîne antidérapante selon une des revendications 1 à 10,
caractérisée en ce que
- la tige de maintien (62) présente deux parties longitudinales (63, 64) ayant des diamètres externes différents,
- la partie longitudinale (64) de plus petit diamètre, est proche de l'extrémité libre (65) de la broche de maintien (62),
- parmi les maillons de la partie d'extrémité (67) de chaque brin de chaîne qui se trouve sur la face arrière de la jante (13), au moins le dernier maillon (65) présente une largeur lui permettant d'être engagé sur la partie longitudinale (63) à plus grand diamètre de la tige de maintien (62),
- les maillons (68) de la partie d'extrémité (69) de chaque brin de chaîne passant sur la face avant de la jante à trous (13) présentent une largeur qui ne leur permet d'être engagés que sur la partie longitudinale (64) de la tige de maintien (62) ayant le plus petit diamètre.

12. Chaîne antidérapante selon la revendication 11,
caractérisée en ce que
la chaîne de sécurité (33) de la broche d'arrêt (32) est reliée à la partie d'extrémité (69) du brin de chaîne dont les maillons ont une largeur plus faible.
